# FASCICULE DE BREVET EUROPEEN

(11) **EP 3 305 667 B1**
(45) Date de publication et mention de la délivrance du brevet: **02.09.2020**
(21) Numéro de dépôt: 17194966.2
(22) Date de dépôt: 05.10.2017
(51) Int. Cl.: B64G 1/22

(54) **DISPOSITIF DE GERBAGE POUR VEHICULE SPATIAL ET VEHICULE SPATIAL ASSOCIE**
STAPELVORRICHTUNG FÜR RAUMFAHRZEUG, UND ENTSPRECHENDES RAUMFAHRZEUG
STACKING DEVICE FOR SPACE VEHICLE AND ASSOCIATED SPACE VEHICLE

(30) Priorité: 06.10.2016 FR 1601448
(43) Date de publication de la demande: 11.04.2018
(73) Titulaire: Thales, 92400 Courbevoie (FR)
(72) Inventeur: COMBERNOUX, Thomas, 06110 LE CANNET (FR); BLANC, Alain-Vincent, 31100 TOULOUSE (FR); DURANTI, Christophe, 06130 GRASSE (FR); YOUSSEFI, Thierry, 31600 LABASTIDETTE (FR)
(74) Mandataire: Lucas, Laurent Jacques

(56) Documents cités:
- WO-A1-02/079034
- FR-A1- 2 768 401
- JP-A- H10 147 298
- US-A- 4 347 023

## Description

La présente invention concerne le domaine spatial. L'invention concerne plus particulièrement un dispositif de gerbage et un véhicule spatial associé.

Les engins ou véhicules spatiaux, tels que, mais non limitativement, les satellites ou les stations orbitales en orbite autour de la terre comprennent des équipements spatiaux destinés à être déployés dans l'espace. Par la suite, on appellera ces équipements, " appendices spatiaux ". Par appendices spatiaux on entend des générateurs solaires, des antennes, des réflecteurs, des miroirs des mats ou tout autre équipement équivalent.

Lors du lancement et de la mise en poste d'un véhicule spatial, les différents appendices spatiaux, équipant ledit véhicule, sont soumis à des efforts important. Afin de les protéger pendant cette phase, les appendices spatiaux sont repliés et maintenus de façon temporaire sur au moins une face du véhicule spatial afin de les immobiliser. Les appendices sont gerbés, c'est à dire maintenus en configuration de stockage, sur le véhicule spatial par un dispositif de gerbage comprenant plusieurs points de gerbage ou mécanismes de maintien et de libération également connu sous le sigle HRM pour « *Hold down and Release Mechanism* », selon la terminologie anglo saxone. Un mécanisme de maintien et de libération d'appendice spatial est composé principalement d'un système d'éjection et d'un tirant de gerbage mis en tension dans un écrou de gerbage destiné à être fixé sur le corps du véhicule spatial. Après la phase de lancement et la mise en poste du véhicule spatial, le système d'éjection de chaque mécanisme de maintien et de libération est actionné afin de libérer les appendices spatiaux et d'assurer leur déploiement, voir WO 02/079034 A1.

Généralement, pendant la phase de lancement et de mise en poste, les appendices spatiaux sont maintenus sur un support du véhicule spatial, par exemple une face de ce dernier, par au moins trois points de gerbage. Lorsque plusieurs appendices spatiaux sont disposés sur la même face du véhicule spatial, chaque appendice est maintenu par quatre autres mécanismes de maintien et de libération.

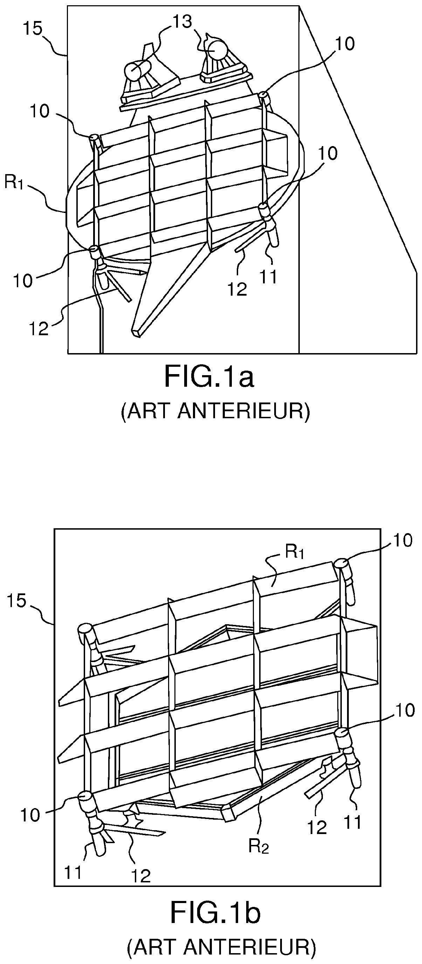

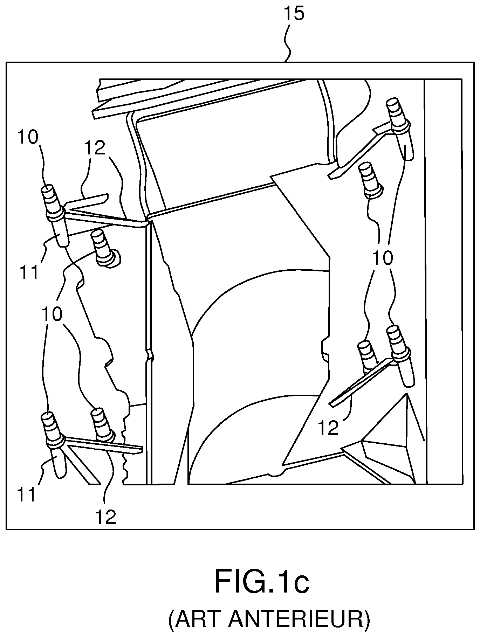

A titre illustratif, les figures 1a, 1b et 1c représentent un exemple de face 15 de satellite sur laquelle sont gerbés deux appendices spatiaux, à savoir, deux réflecteurs d'antenne R1, R2. Chaque réflecteur est maintenu sur la caisse du satellite par un dispositif de gerbage comprenant quatre mécanismes de maintien et de libération, 10, différents. Le réflecteur R2 le plus proche du satellite est maintenu, de façon temporaire, par des points de gerbage 10 directement fixés sur la face 15 du satellite. Le réflecteur R1 le plus éloigné de la face 15 du satellite est maintenu par quatre autres points de gerbage un peu plus en périphérie et surélevés par rapport aux quatre points de gerbage précédents par des rehausses 11. Du fait de leur hauteur, ces points de gerbage 10 rehaussés sont plus encombrants. De plus, afin de les renforcer et d'augmenter leur stabilité, ces réhausses sont munis de barres de renfort 12 ce qui augmente encore leur encombrement, leur masse et le coût du dispositif de gerbage. Ces rehausses 11 et barres de renfort 12 ajoutent également de nouvelles contraintes sur le placement des mécanismes de maintien et de libération 10 pendant la phase de conception du satellite. En effet, ces points de gerbage doivent être placés de sorte que pendant la mission, lorsque les réflecteurs R1, R2 sont déployés, la partie résidente des mécanismes de maintien et de libération 10, à savoir les écrous de gerbage, n'entrent pas dans le champ de vue des sources rayonnantes 13 avec lesquelles coopèrent les réflecteurs d'antenne R1, R2. Les rehausses 11 barres de renfort 12 et autres dispositifs additionnels doivent également être placées de façon à ne pas gêner le déploiement des réflecteurs R1, R2 après le lancement et la mise en poste du véhicule spatial.

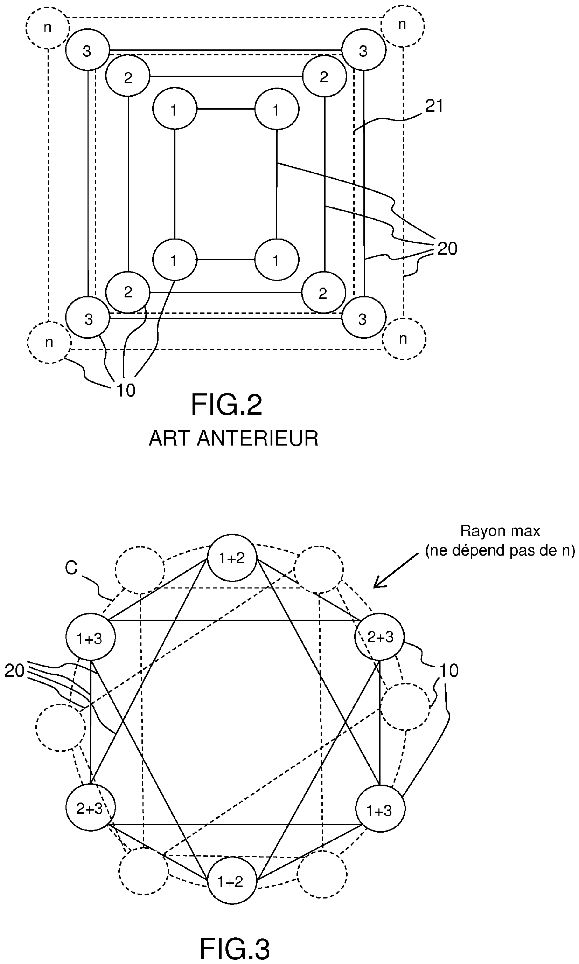

En référence à la figure 2, un autre problème se pose lorsque l'on cherche à gerber plusieurs appendices spatiaux sur la même face d'un véhicule spatial.

D'une part, en augmentant le nombre de mécanismes de maintien et de libération 10 sur une même face de satellite ou mur satellite, on augmente les contraintes d'aménagement sur ce mur. La répartition des mécanismes de maintien et de libération 10 sur le mur satellite doit être réalisée d'une manière compatible avec la transmission des efforts entre les mécanismes de maintien et de libération 10 et la structure du véhicule spatial.

D'autre part, la largeur du véhicule spatial doit être augmentée pour permettre le positionnement des différents points de gerbage sans interférence. En effet, à partir d'un certain nombre d'appendices, la prise en compte de ces contraintes amène les structures de support 20 (ou « *backing structure* » selon la terminologie anglo saxonne) des appendices spatiaux à se retrouver au delà de la structure 21 du véhicule spatial. On se trouve donc dans l'impossibilité de positionner les mécanismes de maintien et de libération 10 sur le véhicule spatial à moins de fixer des dispositifs en porte à faux sur la structure 21 du véhicule, destinés à recevoir les mécanismes de maintien et de libération 10 ce qui pose de nouveaux problème de masse, d'encombrement et de fragilité. Actuellement, compte tenu des contraintes de place sur les véhicules spatiaux, le nombre d'appendices fixés sur une même face de véhicule spatial est généralement limité à deux.

Un but de l'invention est notamment de corriger tout ou partie des inconvénients de l'art antérieur en proposant une solution permettant de gerber deux appendices spatiaux ou plus sur une même face de véhicule spatial tout en ayant un nombre de HRM réduit par rapport aux solutions actuelles.

A cet effet, l'invention a pour objet un dispositif de gerbage pour véhicule spatial selon la revendication 1, ledit dispositif comprenant une pluralité de mécanismes de maintien et de libération et étant configuré pour maintenir, de façon temporaire, n appendices spatiaux, n étant, dans ce contexte, un entier strictement supérieur à 2, sur un même support d'un véhicule spatial à l'aide des mécanismes de maintien et de libération, ledit dispositif de gerbage étant configuré de sorte que plusieurs appendices spatiaux soient maintenus par un même mécanisme de maintien et de libération.

Selon un mode de réalisation, un même mécanisme de maintien et de libération est configuré pour maintenir deux appendices spatiaux.Selon un mode de réalisation, chaque appendice spatial est maintenu par quatre mécanismes de maintien et de libération.

Selon un mode de réalisation, les mécanismes de maintien et de libération sont situés sur un cercle centré sur le centre des appendices spatiaux.

Selon un mode de réalisation, les mécanismes de maintien et de libération sont disposés à la périphérie des appendices spatiaux.

Selon un mode de réalisation, au moins un mécanisme de maintien et de libération traverse au moins un appendice spatial.

Les caractéristiques propres à ces modes de réalisation pouvant être considérées séparément ou en combinaison les unes avec les autres.

L'invention a également pour objet un véhicule spatial comprenant n appendices spatiaux, n étant un entier strictement supérieur à deux, ledit véhicule spatial comprenant au moins un dispositif de gerbage, tel que défini précédemment, configuré pour maintenir temporairement les appendices spatiaux sur une même face du véhicule spatial.

D'autres particularités et avantages de la présente invention apparaîtront plus clairement à la lecture de la description ci-après, donnée à titre illustratif et non limitatif, et faite en référence aux dessins annexés, sur lesquels :
- Les figures 1a, 1b et 1c, déjà présentées, représentent un exemple de face de satellite sur laquelle sont gerbés deux réflecteurs ;
- La figure 2, précédemment citée, illustre un exemple de positionnement de mécanismes de maintien et de libération dans une configuration comprenant plusieurs appendices spatiaux sur une même face de véhicule spatial ;
- La figure 3, représente un exemple de positionnement de mécanismes de maintien et de libération dans une configuration comprenant n appendices spatiaux sur une même face de véhicule spatial selon l'invention ;
- Les figures 4a 4b, représentent respectivement un exemple de positionnement de mécanismes de maintien et de libération dans une configuration comprenant trois appendices spatiaux sur une même face de véhicule spatial et un exemple d'empilage des appendices spatiaux sur les mécanismes de maintien et de libération pour cette même configuration ;
- La figure 5, représente un exemple d'empilage d'appendices spatiaux sur ses mécanismes de maintien et de libération dans une configuration comprenant quatre appendices spatiaux sur une même face de véhicule spatial.

Le principe de l'invention repose sur une utilisation de mécanismes de maintien et de libération communs à plusieurs appendices spatiaux dans un dispositif de gerbage afin de fixer, de façon temporaire, un nombre strictement supérieur à deux, d'appendices spatiaux sur une même face d'engin ou véhicule spatial.

De façon préférentielle, mais non limitative, le véhicule spatial est un satellite artificiel.

La figure 3 représente un exemple de configuration dans laquelle n appendices spatiaux, n représentant un entier strictement supérieur à 2, sont superposés partiellement et fixés de façon temporaire sur une même face de véhicule spatial. Afin de ne pas surcharger la figure, seules les structures de support 20 des appendices spatiaux sont représentées. Dans cette configuration, les appendices spatiaux, et donc leur structure de support 20, sont empilés les uns sur les autres et sont maintenus temporairement sur un support du véhicule spatial, positionné, par exemple, sur une face de ce dernier, à l'aide de mécanismes de maintien et de libération 10.

De façon avantageuse, au moins deux appendices spatiaux peuvent être maintenus, de manière temporaire, par un même mécanisme de maintien et de libération 10. L'utilisation de mécanismes de maintien et de libération 10 communs à plusieurs appendices spatiaux permet avantageusement de réduire le nombre de mécanismes de maintien et de libération à utiliser et donc de réduire la masse fixée sur les faces du véhicule spatial. Cela permet, de manière également avantageuse, d'obtenir des configurations plus compactes.

Suivant un mode de réalisation préféré, le mécanisme de maintien et de libération 10 est dimensionné pour n-1 appendices spatiaux, parmi les n appendices spatiaux montés sur un même support du véhicule spatial. Ainsi, par exemple, si 4 appendices doivent être gerbés, un même mécanisme de maintien et de libération 10 ne sera avantageusement dimensionné que pour des charges correspondant à seulement 3 appendices.

Un autre avantage réside dans le fait que, selon l'invention, tous les mécanismes de maintien et de libération 10 sont de forme identique et ont la même hauteur. De ce fait, lors la phase de qualification des mécanismes de maintien et de libération, la qualification d'un seul de ces mécanismes sera suffisante.

Suivant un mode de réalisation, chaque appendice spatial est maintenu temporairement sur un support du véhicule spatial à l'aide de quatre mécanismes de maintien et de libération 10 traversant des douilles (non représentées) fixées sur la structure de support 20 de chaque appendice spatial. Ces douilles permettent le passage du tirant de gerbage.

Suivant un mode de réalisation, lorsque, par exemple, les différents appendices spatiaux ont des formes et des dimensions similaires, les mécanismes de maintien et de libération 10 peuvent être disposés à la périphérie des appendices spatiaux. De façon avantageuse, cette disposition permet de faciliter l'accès aux appendices spatiaux pendant les phases d'assemblage, d'intégration et de test.

Suivant un mode de réalisation, au moins un mécanisme de maintien et de libération 10 peut traverser au moins un appendice spatial dans sa partie centrale.

Alternativement, lorsque les différents appendices spatiaux ont des formes et/ou des dimensions différentes, les mécanismes de maintien et de libération 10 peuvent être disposés dans une zone de recouvrement commune aux appendices afin de fixer ensemble les appendices spatiaux.

Comme illustré sur la figure 3, les appendices spatiaux peuvent être empilés de façon concentrique et les mécanismes de maintien et de libération peuvent être répartis sur un cercle C dont le centre est sensiblement aligné sur celui du cercle qui circonscrit l'empilement des différents appendices spatiaux. Dans cette configuration, le rayon du cercle C, sur lequel sont alignés les mécanismes de maintien et de libération 10, ne dépend pas du nombre de d'appendices spatiaux gerbés, mais seulement de celui sur lequel les douilles sont disposées sur la structure de support 20 de chaque appendice spatial.

Selon un mode de réalisation alternatif, les douilles, destinées à être traversée par les mécanismes de maintien et de libération, peuvent être réparties suivant une disposition irrégulière ou patatoïdale.

Suivant un mode de réalisation, les mécanismes de maintien et de libération 10 peuvent être répartis de façon uniforme sur la structure 21 du véhicule spatial. Ces mécanismes de maintien et de libération 10 peuvent, par exemple, être répartis uniformément sur un cercle.

Suivant un mode de réalisation, les douilles de chaque appendice spatial peuvent être disposées de façon sensiblement identique sur chacun des supports 20 des appendices spatiaux. Par exemple, si chaque structure de support 20 de chaque appendice spatial forme un quadrilatère, comme illustré sur la figure 3, les douilles peuvent être disposées à chaque angle des quadrilatères.

Suivant un mode de réalisation préférentiel, chaque point de gerbage maintient deux appendices spatiaux différents. De façon avantageuse, cette limitation du nombre d'appendices spatiaux par mécanisme de maintien et de libération 10 permet de réduire la hauteur de chaque mécanisme de maintien et de libération 10. Dans cette configuration, pour n appendices spatiaux, 2n mécanismes de maintien et de libération 10 sont nécessaires pour maintenir l'ensemble des appendices spatiaux sur le véhicule spatial pendant la phase de lancement et de mise en poste. Si on compare cette solution à la solution classique consistant à immobiliser chaque appendice spatial par quatre mécanismes de maintien et de libération, la solution proposée permet de réduire de moitié le nombre de mécanismes de maintien et de libération nécessaire pour gerber l'ensemble des appendices spatiaux. Ceci permet de réaliser un gain d'encombrement et de masse non négligeable.

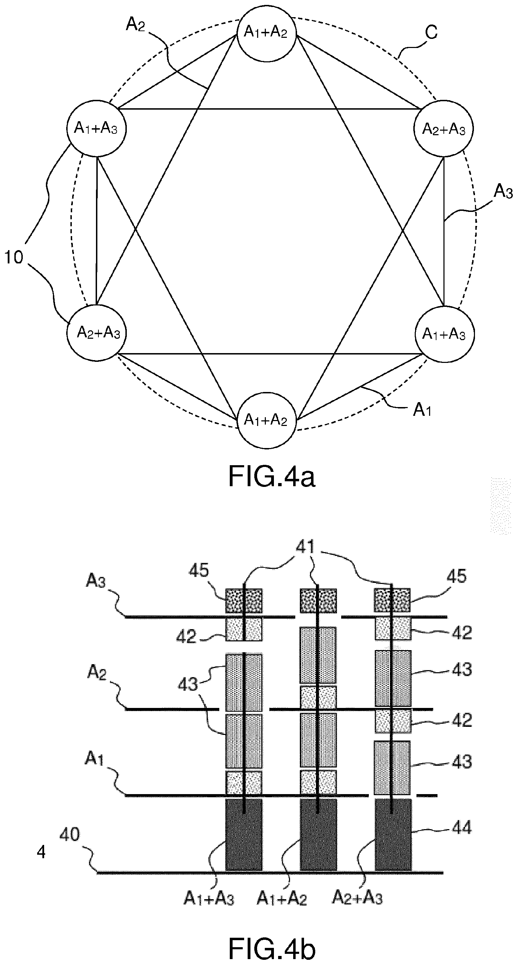

Les figures 4 et 4b illustrent un exemple de mode de réalisation d'un dispositif de gerbage permettant de maintenir de façon temporaire trois appendices spatiaux sur une même face de véhicule spatial. Dans ce mode de réalisation, on suppose que chaque appendice spatial est fixé par quatre mécanismes de maintien et de libération 10 et que chaque mécanisme 10 maintient deux appendices spatiaux différents. Pour cela, six mécanismes de maintien et de libération sont nécessaires.

La figure 4a représente un exemple de positionnement des mécanismes de maintien et de libération dans un dispositif de gerbage d'appendices spatiaux. Dans cet exemple, les structures de support 20 des trois appendices spatiaux sont empilées de façon concentrique et présentent une forme telle que les mécanismes de maintien et de libération peuvent être répartis à la périphérie des appendices spatiaux sur un cercle C de centre sensiblement égal à celui de l'empilement. Dans cette configuration, deux mécanismes de maintien et de libération 10 identiques maintiennent les appendices numérotés A1 et A3, deux autres les appendices numérotés A1 et A2 et deux autres les appendices numérotés A2 et A3. Le dispositif de gerbage compte donc trois associations de mécanisme de maintien et de libération 10 différentes. De façon générale, un dispositif de gerbage destiné à gerber n appendices spatiaux, n représentant un entier strictement supérieur à deux, utilise n associations de mécanisme de maintien et de libération 10 différentes.

Comme énoncé précédemment, les appendices spatiaux sont maintenus contre le corps 40 du véhicule spatial en configuration de gerbage par des tirants 41 de gerbage à l'aide de douilles 42 fixées sur les structures de support 20 des appendices spatiaux et d'entretoises ou cylindres de liaison 43. Les cylindres de liaison 43 ont pour fonction de maintenir l'écartement entre les différents appendices spatiaux A1, A2, A3. Chaque tirant 41 de gerbage est mis en tension par un écrou de gerbage 44 et un système d'éjection 45 permet de libérer les appendices spatiaux et d'assurer leur déploiement après son activation.

La figure 4b illustre les combinaisons possibles de douilles 42 et cylindres de liaison 43 afin de réaliser les différentes configurations des mécanismes de maintien et de libération 10 pour cet exemple de réalisation.

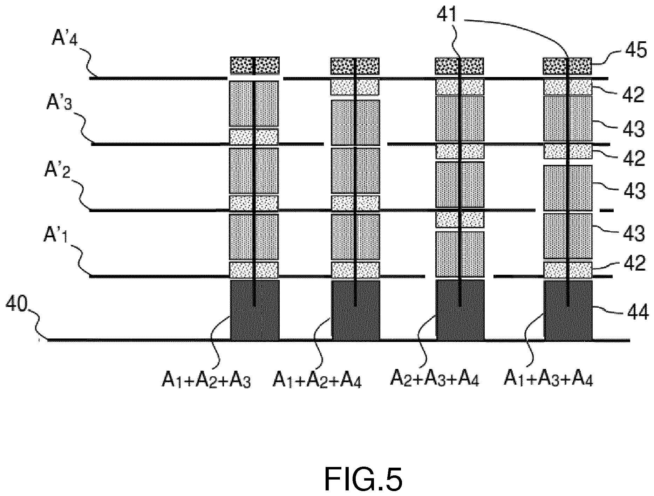

A titre illustratif, la figure 5 représente un exemple de configuration de mécanismes de maintien et de libération 10 dans le cas d'un empilage de quatre appendices spatiaux A'1, A'2, A'3, A'4 sur une même face de véhicule spatial. Dans ce mode de réalisation, quatre combinaisons différentes de douilles 42 et cylindres de liaison 43 sont nécessaires.

L'invention a également pour objet un véhicule spatial comprenant un nombre entier strictement supérieur à deux d'appendices spatiaux. Le véhicule spatial, comprend au moins un dispositif de gerbage tel que présenté précédemment configuré pour maintenir temporairement en position de stockage au moins trois appendices spatiaux sur une même face du véhicule spatial.

## Revendications

1. Dispositif de gerbage pour véhicule spatial, ledit dispositif comprenant n appendices spatiaux, n étant un entier strictement supérieur à 2, et une pluralité de mécanismes de maintien et de libération (10), ledit dispositif de gerbage étant configuré pour maintenir en position gerbée, de façon temporaire, les n appendices spatiaux sur un même support du véhicule spatial à l'aide des mécanismes de maintien et de libération (10), ledit dispositif de gerbage comportant des douilles (42), chaque douille étant implantée sur une structure support (20) d'un des appendices spatiaux, et permettant la fixation d'un des mécanismes de maintien et de libération (10) sur un appendice spatial; **caractérisé en ce que** le nombre, la configuration et l'agencement des mécanismes de maintien et de libération (10) sont déterminés de telle façon:
- que chaque mécanisme de maintien et de libération (10) est dimensionné et configuré pour maintenir en position gerbée n-1 appendices spatiaux; et
- que pour chacun des n appendices spatiaux, chacun des autres appendice spatiaux différents de l'appendice spatial considéré est maintenu en position par au moins un des mécanisme de maintien et de libération (10) assurant le maintien de l'appendice spatial considéré.

2. Dispositif de gerbage selon la revendication 1, **caractérisé en ce que** chaque mécanisme de maintien et de libération (10) comportant un tirant de gerbage (41) et des entretoises ou cylindres de liaison (43) traversées par ledit tirant de gerbage; le tirant de gerbage (41) de chacun des mécanismes de maintien et de libération (10) traversant un nombre déterminé de douilles (42) de façon à assurer le maintien des appendices spatiaux sur lesquelle lesdites douilles sont montées, les différentes entretoises constituant chaque mécanisme de maintien et de libération (10) étant dimensionnées et agencées vis-à-vis des douilles traversées par le tirant de gerbage de façon à assurer le maintien de l'écartement entre les différents appendices spatiaux maintenu par mécanisme de maintien et de libération (10) considéré.

3. Dispositif de gerbage selon la revendication 2, **caractérisé en ce que** chaque mécanisme de maintien et de libération (10) comporte en outre un écrou de gerbage (44) permettant de mettre en tension le tirant de gerbage (41) dudit mécanisme.

4. Dispositif de gerbage selon une des revendications précédentes dans lequel chaque appendice spatial est maintenu par quatre mécanismes de maintien et de libération (10).

5. Dispositif de gerbage la revendication 4, dans lequel, le nombre n d'appendices spatiaux étant égal à 3, chaque mécanisme de maintien et de libération (10) est configuré pour assurer le maintien de deux appendices spatiaux.

6. Dispositif de gerbage selon une des revendications précédentes dans lequel les mécanismes de maintien et de libération (10) sont situés sur un cercle centré sur le centre des appendices spatiaux.

7. Dispositif de gerbage selon une des revendications précédentes dans lequel les mécanismes de maintien et de libération (10) sont disposés à la périphérie des appendices spatiaux.

8. Dispositif de gerbage selon une des revendications 1 à 6 dans lequel les mécanismes de maintien et de libération (10) sont disposés dans une zone de recouvrement commune aux différents appendices spatiaux.

9. Véhicule spatial, ledit véhicule spatial étant **caractérisé en ce qu'**il comprend au moins un dispositif de gerbage selon une des revendications précédentes configuré pour maintenir temporairement les appendices spatiaux sur une même face du véhicule spatial.

## Patentansprüche

1. Stapelvorrichtung für Raumfahrzeug, wobei die Vorrichtung n Raumansatzteile beinhaltet, wobei n eine Ganzzahl streng größer als 2 ist, und eine Vielzahl von Halte- und Lösemechanismen (10), wobei die Stapelvorrichtung konfiguriert ist, um zeitweilig die n Raumansatzteile auf einer selben Halterung des Raumfahrzeugs mithilfe der Halte- und Lösemechanismen (10) in gestapelter Position zu halten, wobei die Stapelvorrichtung Hülsen (42) beinhaltet, wobei jede Hülse an einer Stützstruktur (20) eines der Raumeinsatzteile montiert ist und die Befestigung eines der Halte- und Lösemechanismen (10) an einem Raumansatzteil ermöglicht; **dadurch gekennzeichnet, dass** die Anzahl, die Konfiguration und die Anordnung der Halte- und Lösemechanismen (10) so bestimmt sind:
- dass jeder Halte- und Lösemechanismus (10) dimensioniert und konfiguriert ist, um n-1 Raumansatzteile in gestapelter Position zu halten; und
- dass für jedes der n Raumansatzteile, jedes der anderen, sich von dem betrachteten Raumansatzteil unterscheidenden Raumansatzteile durch mindestens einen der Halte- und Lösemechanismen (10) in Position gehalten wird, welcher den Halt des betrachteten Raumansatzteils gewährleistet.

2. Stapelvorrichtung nach Anspruch 1, **dadurch gekennzeichnet, dass** jeder Halte- und Lösemechanismus (10) ein Stapel-Zugelement (41) und Abstandsstücke oder Verbindungszylinder (43) beinhaltet, welche durch das Stapel-Zugelement durchquert werden; wobei das Stapel-Zugelement (41) eines jeden der Halte- und Lösemechanismen (10) eine bestimmte Anzahl an Hülsen (42) so durchquert, dass der Halt der Raumansatzteile, an welchen die Hülsen montiert sind, gewährleistet ist, wobei die unterschiedlichen Abstandsstücke, welche jeden Halte- und Lösemechanismus (10) bilden, so dimensioniert und in Bezug auf die durch das Stapel-Zugelement durchquerten Hülsen angeordnet sind, dass sie den Halt des Abstandes zwischen den unterschiedlichen Raumansatzteilen gewährleisten, welcher durch den betrachteten Halte- und Lösemechanismus (10) gehalten wird.

3. Stapelvorrichtung nach Anspruch 2, **dadurch gekennzeichnet, dass** jeder Halte- und Lösemechanismus (10) zudem eine Stapelmutter (44) beinhaltet, welche es ermöglicht, das Stapel-Zugelement (41) des Mechanismus einzuspannen.

4. Stapelvorrichtung nach einem der vorhergehenden Ansprüche, wobeijedes Raumansatzteil durch vier Halte- und Lösemechanismen (10) gehalten wird.

5. Stapelvorrichtung nach Anspruch 4, wobeidie Anzahl n an Raumansatzteilen gleich 3 ist, wobei jeder Halte- und Lösemechanismus (10) konfiguriert ist, um den Halt von zwei Raumansatzteilen zu gewährleisten.

6. Stapelvorrichtung nach einem der vorhergehenden Ansprüche, wobeidie Halte- und Lösemechanismen (10) auf einem Kreis befindlich sind, welcher auf den Mittelpunkt der Raumansatzteile zentriert ist.

7. Stapelvorrichtung nach einem der vorhergehenden Ansprüche, wobeidie Halte- und Lösemechanismen (10) an der Peripherie der Raumansatzteile angeordnet sind.

8. Stapelvorrichtung nach einem der vorhergehenden Ansprüche 1 bis 6, wobeidie Halte- und Lösemechanismen (10) in einem gemeinsamen Überlappungsbereich der unterschiedlichen Raumansatzteile angeordnet sind.

9. Raumfahrzeug, wobei das Raumfahrzeug **dadurch gekennzeichnet ist, dass** es mindestens eine Stapelvorrichtung nach einem der vorhergehenden Ansprüche beinhaltet, dazu konfiguriert, zeitweilig die Raumansatzteile auf einer gleichen Seite des Raumfahrzeugs zu halten.

## Claims

1. Stacking device for a space vehicle, said device comprising n space appendages, n being an integer strictly greater than 2, and a plurality of hold down and release mechanisms (10), said stacking device being configured to hold, temporarily, the n space appendages on one and the same support of a space vehicle in a stacked position using hold down and release mechanisms (10), said stacking device comprising bushings (42), each bushing being located on the backing structure (20) of one of the space appendages; and allowing the fixing of a hold down and release mechanism (10) to a space appendage; **characterized in that** the number, the configuration and the arrangement of the hold down and release mechanisms (10) are determined in such a way:
- that each hold down and release mechanism (10) is sized and configured to keep n-1 space appendages in a stacked position; and
- that for each of the n space appendages, each of the other space appendages that are different from the space appendage concerned is held in position by at least one of the hold down and release mechanisms (10) ensuring the holding of the space appendage concerned.

2. Stacking device according to claim 1, **characterized in that**, each hold down and release mechanism (10) comprises a stacking tie rod (41) and spacers or linking cylinders (43) passed through by said stacking tie rod; the stacking tie rod (41) of each of the hold down and release mechanisms (10) passing through a determined number of bushings (42) so as to ensure the holding of the space appendages on which said bushings are mounted, the different spacers constituting each hold down and release mechanism (10) being dimensioned and arranged with respect to the bushings passed through by the stacking tie rod so as to ensure that the spacing between the different space appendages held by the hold down and release mechanism (10) concerned is maintained.

3. Stacking device according to claim 2, **characterized in that** each hold down and release mechanism (10) further comprises a stacking nut (44) allowing the tensioning of the stacking tie rod (41) of said mechanism.

4. Stacking device according to one of the preceding claims, wherein each space appendage is held by four hold down and release mechanisms (10).

5. Stacking device according to claim 4, wherein, the number n of space appendages being equal to 3, each hold down and release mechanism (10) is configured to ensure the holding of two space appendages.

6. Stacking device according to one of the preceding claims, wherein the hold down and release mechanisms (10) are situated on a circle centred on the centre of the space appendages.

7. Stacking device according to one of the preceding claims, wherein the hold down and release mechanisms (10) are disposed at the periphery of the space appendages.

8. Stacking device according to claims 1 to 6, wherein the hold down and release mechanisms (10) are disposed in a zone of overlap common to the different space appendages.

9. Space vehicle, said space vehicle being **characterized in that** it comprises at least one stacking device according to one of the preceding claims configured to temporarily hold the space appendages on one and the same face of the space vehicle.
